Europäisches Patentamt

European Patent Office

Office européen des brevets

(11) Numéro de publication: **0 194 189**
A1

# (12) DEMANDE DE BREVET EUROPEEN

(21) Numéro de dépôt: **86400357.9**

(22) Date de dépôt: **20.02.86**

(51) Int. Cl.⁴: **A 21 D 6/00,** A 21 D 2/22

(30) Priorité: **20.02.85 FR 8502437**

(43) Date de publication de la demande: **10.09.86**
**Bulletin 86/37**

(84) Etats contractants désignés: **AT BE CH DE GB IT LI LU NL**

(71) Demandeur: **GRANDS MOULINS DE PANTIN S.A., 6, rue du Louvre, F-75002 Paris (FR)**

(72) Inventeur: **Grandvoinnet, Pierre, 5, rue de la Liberté, F-93200 Saint-Denis (FR)**
Inventeur: **Portier, André, 108, Avenue Jean Jaurès, F-92140 Clamart (FR)**
Inventeur: **Bonnet, Michel, 24, Allée Montmartre, F-93320 Les Pavillons-sous-Bois (FR)**

(74) Mandataire: **Chereau, Louis et al, Novapat-Cabinet Chereau 107, Boulevard Péreire, F-75017 Paris (FR)**

(54) **Procédé de fabrication du pain.**

(57) Le procédé a pour but de préparer des patons surgelés, qui peuvent être mis au four directement à la sortie du congélateur. Pour ce faire, on emploie une farine à forte valeur boulangère, avec 2% de levure, et 500 ppm d'acide ascorbique. Après division de la pâte, la détente est prolongée jusqu'à 60 minutes. Il est ainsi possible, à la suite de l'apprêt, de surgeler les patons, et de les cuire à la sortie du congélateur.

EP 0 194 189 A1

ACTORUM AG

1.

La présente invention a pour objet un procédé de fabrication du pain dit Pain Français. On a cherché récemment à simplifier le travail, et l'installation du boulanger. Le pain est préparé industriellement jusqu'à une certaine étape, puis est surgelé. Il est livré surgelé au boulanger qui le conserve dans un congélateur, l'en sort pour effectuer les dernières étapes de la fabrication, comprenant la cuisson. Ces dernières étapes comprennent aussi une remontée en température et une fermentation. Il n'a pas été possible jusqu'à maintenant de proposer au boulanger un produit surgelé qu'il suffirait de mettre au four directement au sortir du congélateur.

La formule de la panification française comprend: farine, eau, levure, sel (ClNa) et auxiliaires technologiques : gluten, alpha amylase, acide ascorbique et lécithine. La farine peut varier en teneur en eau, dont elle absorbe plus ou moins, en matières minérales, selon le type, et en protéines, ce qui induit une plus ou moins grande valeur boulangère. La farine peut aussi varier en pouvoir diastasique, ce qui conduit à une fermentation plus ou moins rapide. Enfin la farine est caractérisée par sa force boulangère. Cette force se mesure à l'alvéographe et est définie par la norme AFNOR V 03710 dont une dernière édition
date de Novembre 1974. Elle est représentée par la lettre
W, et dans la panification classique a une valeur de l'ordre de 150 à 200. La levure employée est toujours le
Saccharomyces cereviciae.

La panification comporte une alternance de phases actives et de repos qui permettent de passer des matières premières au produit fini. La longueur de ces phases et la température à laquelle elles se déroulent peuvent
varier.

Pendant les phases actives, la pâte voit sa force
augmenter pour devenir optimum. Pendant les phases de repos,
la pâte, suivant les cas, voit sa force augmenter ou diminuer. Durant l'ensemble du processus, la pâte fermente plus
ou moins vite, selon la température mais peut aussi être arrêtée à condition que la température soit assez basse.

Pour des raisons diverses de délai, le ralentissement, voire l'arrêt de la fermentation a fait l'objet d'études et de mises au point diverses.

Si l'on estime que la température normale de fermentation est la température ambiante (20 à 30°C dans les
fournils selon les cas), toute diminution de température
sera considérée comme un changement de technique.

C'est généralement aux pâtons façonnés que l'on applique des techniques impliquant des températures inférieures à la température ambiante.

Ainsi : - en chambre dite à pousse contrôlée à 13/15°C,
pour une durée totale de fermentation dite
apprêt de 7 ou 8 h au lieu de 1 heure 30 à
3 heures 30,
- en chambre dite à pousse contrôlée à température régulée de 0 à 4°C pour une durée totale de
fermentation de 24 à 72 heures, incluant une

3.

période de réchauffement (de 0 à 18°C avec une plage à 18°C) de 6 à 10 heures pour que la fermentation dite apprêt se produise.

- en surgélation congélation à -20°C/-30°C et stockage à -20°C pendant une période allant jusqu'à 1 mois. La fermentation dite apprêt a lieu après ce délai en cabine de fermentation régulé à 23/25°C et humidité relative de 80 %.

Conformément à la présente invention, on a mis au point un procédé qui permet d'obtenir du pain français en cuisant des patons, ayant terminé leur fermentation, surgelés congelés,stockés et enfournés dès leur sortie du congélateur.

Le procédé selon l'invention est remarquable notamment par les caractéristiques suivantes :

- on a employé une farine à très forte valeur boulangère, de l'ordre de 300 à 350, en choisissant des blés spéciaux;

- on y ajoute eau, sel, et de la levure, dans une proportion limitée à 2 % en poids, par rapport à la farine, au lieu des 2,5 % usuels;

- on a renforcé cette farine par des auxiliaires technologiques.

Les proportions suivantes sont données en pourcentage en poids par rapport à la farine : 0,7 à 1 % de gluten, ce qui est déjà très fort pour un pain classique, avec une farine de force boulangère nettement moins élevée; dose courante d'amylase; 0,05 % soit 500 ppm (parties par million) d'acide ascorbique, au lieu de 200 à 300 dans la fabrication classique; 0,2 à 0,3 % de lécithine, ce qui est inhabituel car la farine est forte;

- on a diminué l'hydratation, le taux de levure et la température de la pâte en fin de pétrissage, aussi bien pour la rendre plus résistante que pour ralentir la fermentation;

- le pétrissage et la première fermentation en

4.

cuve sont appliqués de façon courante;

   - après division de la pâte, la période de repos dite détente est prolongée jusqu'à 60 minutes (au lieu de 20 minutes couramment appliquées). Ceci améliore la force boulangère;

   - l'apprêt qui suit le façonnage est d'environ 2 heures 30, les patons étant incisés;

   - la surgélation est effectuée pendant un temps compris entre trente minutes et une heure, à une température d'environ -50°C, les patons sont couverts pour éviter tout croutage dû à une évaporation d'eau en surface;

   - le stockage est effectué en sacs étanches à -25°C;

   - les patons sont sortis de l'unité de stockage, sortis des sacs et directement introduits dans un four réglé à une température inférieure à la température normale, c'est-à-dire à 220-230°C au lieu de la température habituelle de 250°C; la cuisson est prolongée de dix minutes environ par rapport à la cuisson normale.

   Ce procédé, rendu possible par la formule du pain et par la durée et les conditions de chaque étape permet de cuire le pain à sa sortie du congélateur. Cela représente une simplification considérable, et dans l'installation, et dans le fonctionnement d'une boulangerie, avec en plus la possibilité d'adapter la fabrication à la demande.

   La présente invention n'est pas limitée aux exemples de réalisation qui viennent d'être décrits, elle est au contraire susceptible de modifications et de variantes qui apparaîtront à l'homme de l'art.

5.

REVENDICATIONS

1 - Procédé de fabrication de pain, du type dit pain français, comprenant notamment de l'eau, du sel, de la levure, de la farine, de l'acide ascorbique, le pétrissage et la fermentation en cuve étant appliqués de façon courante, caractérisé par les étapes suivantes :

- la farine utilisée a une force boulangère W de 300 à 350,

- la pâte est divisée puis mise au repos une heure environ,

- la pâte subit l'apprêt habituel et les patons sont incisés,

- les patons sont surgelés puis stockés à -25°C,

- les patons sont extraits de l'unité de stockage et directement introduits dans un four réglé à une température comprise entre 220°C et 230°C.

2 - Procédé selon la revendication 1, caractérisé en ce que l'acide ascorbique est introduit avant la division dans une proportion de 500 ppm.

3 - Procédé selon la revendication 1 ou 2, caractérisé en ce que la levure est introduite avant la division dans une proportion inférieure ou égale à 2 %.

4 - Paton pour la fabrication de pain, du type dit pain français, caractérisé en ce qu'il comprend notamment :

- de la farine à force boulangère W de 300 à 350,

- de l'acide ascorbique dosé à 500 ppm

- de la levure dans une proportion inférieure ou égale à 2 %.

Office européen
des brevets

**RAPPORT DE RECHERCHE EUROPEENNE**

0194189
Numéro de la demande

EP  86 40 0357

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 115 108  (GENERAL FOOD CORP.) <br> *  Revendications 1,5,6,10,12,14; exemples  1,2,13; page 11, lignes 7-26 * | 1,3 | A 21 D    6/00 <br> A 21 D    2/22 |
| Y |  | 2 | |
| Y | GB-A-1 103 742  (INTERNATIONAL MILLING CO.) <br> * Exemples 2,3; tables IV,V * | 2 | |
| X | US-A-4 450 177  (R.W. LARSON) <br> * Exemples 1,2 * | 1 | |
| A | FR-A-2 344 229  (A. BOVRDON) <br> *  Revendications  1,4-6; page 2, lignes 29-34 * | 1 | |
| A | FR-A-2 481 072  (M. POUPARD et al.) <br> *  Revendications  1,5,7; page 3, lines 20-39 * | 1 | |
| A | FR-A-2 533 418  (SOCIETE BI.CE.GE) <br> *  Revendications; page 6, lignes 14-23 * | 1 | |
|  | ---          -/- | | |

DOMAINES TECHNIQUES RECHERCHES (Int. Cl.4)

A 21 D

Le présent rapport de recherche a été établi pour toutes les revendications

| Lieu de la recherche <br> LA HAYE | Date d'achèvement de la recherche <br> 28-05-1986 | Examinateur <br> COUCKE A.O.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82

| | | |
|---|---|---|
| Office européen des brevets | | |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 486 772 (M.H. MARTINETTI) * Revendication 1; page 6, lignes 1-5 * | 1,3 | |
| | ----- | | |
| | | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 28-05-1986 | COUCKE A.O.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82